(19) Europäisches Patentamt
European Patent Office
Office européen des brevets

(11) **EP 4 067 770 A1**

(12) **EUROPÄISCHE PATENTANMELDUNG**

(43) Veröffentlichungstag:
05.10.2022  Patentblatt 2022/40

(21) Anmeldenummer: 22169607.3

(22) Anmeldetag: **24.11.2015**

(51) Internationale Patentklassifikation (IPC):
**F24F 12/00** *(2006.01)*   **F24F 11/00** *(2018.01)*
**F24F 140/20** *(2018.01)*   **F24F 11/83** *(2018.01)*
**F24F 110/10** *(2018.01)*

(52) Gemeinsame Patentklassifikation (CPC):
**F24F 12/002; F24F 11/83;** F24F 11/30; F24F 11/84;
F24F 11/85; F24F 2110/10; F24F 2140/20;
Y02B 30/56

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **27.11.2014   DE 102014117477
24.12.2014   DE 202014106278 U
12.03.2015   DE 102015103676**

(62) Dokumentnummer(n) der früheren Anmeldung(en)
nach Art. 76 EPÜ:
**15196150.5 / 3 029 391**

(71) Anmelder: **Hombücher, Heinz-Dieter
63179 Obertshausen (DE)**

(72) Erfinder: **Hombücher, Heinz-Dieter
63179 Obertshausen (DE)**

(74) Vertreter: **Stahl, Dietmar
Dreieichstrasse 30
63179 Obertshausen (DE)**

Bemerkungen:
Diese Anmeldung ist am 24-04-2022 als
Teilanmeldung zu der unter INID-Code 62 erwähnten
Anmeldung eingereicht worden.

(54) **VERFAHREN ZUR REGELUNG DES WÄRMETRÄGER-VOLUMENSTROMS EINES KREISLAUFVERBUNDSYSTEMS UND VORRICHTUNG DAFÜR**

(57)   Ein Verfahren zur Regelung eines Wärmeträger-Volumenstromes in einem Kreislaufverbundsystem arbeitet mit der einer Regeleinrichtung zur Erzeugung einer maximal möglichen Leistungsübertragung des Wärmeträgers. Das Verfahren kann auch mittels des maximal möglichen Temperaturänderungsgrad im Abluftvolumenstrom ausgeführt werden. Das Verfahren kann auch mit dem maximal möglichen Temperaturänderungsgrad in dem Zuluftvolumenstrom ausgeführt werden.

Fig. 1

EP 4 067 770 A1

**Beschreibung**

Die Erfindung betrifft ein Verfahren zur Regelung des Wärmeträger-Volumenstroms eines Kreislaufverbundsystems mit der maximal möglichen Leistungsübertragung des Wärmeträgers gemäß dem Oberbegriff des Anspruchs 1 sowie eine Vorrichtung nach dem Oberbegriff des Anspruches 2.

Verfahren zur Wärmerückgewinnung sind in Verbindung mit Kreislaufverbundsystemen weithin bekannt und werden auch häufig eingesetzt. Hierzu wurde in einem Fachaufsatz von Dr. Ing. Christoph Kaup, "Hybride Hochleistungs-WRG auf Basis des Kreislaufverbundsystems" aus dem Fach Journal 2004/05, Seite 4 bis 11, berichtet. Weitere Veröffentlichungen hierzu sind in "Wärme- und Kälterückgewinnung in raumlufttechnischen Anlagen", 5. Auflage, 2001, ISBN 3-8041-2233-7 dokumentiert.

In beiden Veröffentlichungen wird ausgeführt, dass der abzuführenden Abluft eines Lüftungsgerätes Energie entzogen wird. Diese zurückgewonnene Energie wird dann an die dem Lüftungsgerät zuzuführende Zuluft wieder übergeben. Dabei wird der Wärmeentzug aus der Abluft geregelt, indem weniger oder mehr Wärmeträger (Zwischenmedium) durch den Abluft-Wärmeübertrager und durch den Zuluft-Wärmeübertrager gepumpt wird.

Der erforderliche oder gewünschte Volumenstrom des Wärmeträgers (Zwischenmedium) wird mit Hilfe der Wärmestromkapazitäten für den Luftvolumenstrom und den Volumenstrom des Zwischenmediums (Wärmeträger) nach dem folgenden Zusammenhang berechnet:

$$m_L \times c_{pL} = m_Z \times c_{pZ}$$

Kennzeichnung: L für die Luftseite; Z für das Zwischenmedium

Damit lässt sich der erforderliche Volumenstrom des Wärmeträgers jedoch nur unzureichend regeln. Das liegt daran, dass zum einen die spezifische Wärmekapazität $c_{pL}$ für Luft und die spezifische Wärmekapazität $c_{pZ}$ für das Zwischenmedium (Wärmeträger) nicht konstant sind. Zum anderen können aber auch noch die Massenströme $m_L$ für Luft und mz für das Zwischenmedium (Wärmeträger) variieren.

Außerdem benötigt man zur Ermittlung der Massenströme zu den durchgesetzten Luftströmen geeignete Messeinrichtungen für die zugehörigen Volumenströme, die jedoch auch nur mit einem recht ausgeprägten Toleranzbereich zur Verfügung stehen. Zudem benötigt man für die Berechnung der Wärmekapazitäten über die Massenströme der Luft den Luftvolumenströmen zugeordnete Temperatur- und Feuchtemesseinrichtungen. Dies dient zu Bestimmung der Dichte der Luftvolumenströme und erhöht die Komplexität des Lüftungsgerätes nicht unbeträchtlich.

Eine mit den zuvor beschriebenen Eigenschaften des Standes der Technik ausgestattete Vorrichtung für die Wärmerückgewinnung ist also doch recht aufwändig. Die tatsächlich erreichbare Wärmerückgewinnung weicht in diesem Fall sogar nach unten von der berechneten Wärmerückgewinnung. Grund dafür sind die zuvor bereits genannten systembedingten Messungenauigkeiten und zwangsläufig anfallenden Toleranzen bei der Wertermittlung.

Nach der im Stand der Technik vorgeschlagenen Lösung unterschreitet daher die tatsächlich gewonnene Wärmeenergiemenge diejenige Wärmeenergiemenge, die maximal zurückgewonnen werden kann.

Dies gilt insbesondere dann, wenn

- ungleiche Luftmassenströme im Vergleich zwischen Zuluft und Abluft gefördert werden,
- ein unterschiedlicher Wassergehalt der Abluft gegeben ist und ebenfalls
- wenn unterschiedliche Ablufttemperaturen und Außentemperaturen vorliegen. Außerdem ändern sich mit den unterschiedlichen Temperaturen die thermodynamischen Eigenschaften des Wärmeträgers
- im Teillastvolumenstrom sich die innere Wärmeübergangszahl auf Grund der niedrigeren Geschwindigkeit des Wärmeträgers ändert und/oder
- sich mit der Wetterlage und der örtlichen Höhenlage der Lüftungsanlage die Dichte der Luft ändert.

Weiterhin ist aus DE 10 2012 105 255 A1 eine Vorrichtung zur Regelung eines definierten Förderstroms ohne Durchflussmesseinrichtung bekannt.

Hierbei ist eine programmierbare Regeleinrichtung 5 in Verbindung mit einem Frequenzumrichter für die Kreiselpumpe in einem Hydrauliksystem einer Wärmepumpe auf deren Verflüssigerseite vorgesehen. Die Regeleinrichtung ermittelt den erforderlichen Förderstrom auf Grund der angeforderten Heizleistung der Wärmepumpe. In einem Kreislaufverbundsystem wird dazu einer Regeleinrichtung über ein analoges oder digitales Signal des Luftvolumenstromes eines Lüftungsgerätes für die Ermittlung der Betriebsparameter einer Kreiselpumpe übermittelt. Die Einrichtung weist die gleichen zuvor beschriebenen Nachteile des weiteren Standes der Technik auf.

Aufgabe der vorliegenden Erfindung ist es daher, mit wenig Aufwand eine hocheffektive Wärme- und Kälterückgewinnung auch bei unterschiedlichsten Außen- und Ablufttemperaturen, unterschiedlichen Feuchten der Zu- und Abluft sowie unterschiedlichen Luftvolumenströme der Zuluft und der Abluft durch leistungsangepasste Regelung des Wärmeträger-Volumenstroms zu erreichen.

Die Lösung der Aufgabe zur effizienten Regelung des Volumenstroms des Wärmeträgers durch Ermittlung der Leistungsübertragung oder durch Ermittlung des maximalen Temperaturänderungsgrades gestaltet sich in einem Verfahren nach den Merkmalen von Anspruch 1 und in einer Vorrichtung nach Anspruch 2.

Ein zugrunde liegendes Verfahren zur Regelung eines Wärmeträger-Volumenstrom wird in einem Kreislaufverbundsystem mit wenigstens einem in einem Zuluftvolumenstrom angeordneten Zuluftwärmeübertrager und wenigstens einem in einem Abluftvolumenstrom angeordneten Abluftwärmeübertrager durchgeführt. Der/die Zuluftwärmeübertrager und der/die Abluftwärmeübertrager sind mittels Wärmeträgerleitungen derart gekoppelt, dass ein Wärmeträger mittels wenigstens einer Umwälzpumpe nacheinander durch den/die Zuluftwärmeübertrager und den/die Abluftwärmeübertrager förderbar ist. So kann das Kreislaufverbundsystem auf der Basis von Temperaturmessungen des Wärmeträgers vor dem Eintritt in den/die Abluftwärmeübertrager und nach dem Austritt aus dem/den Abluftwärmeübertragern mit einer maximal möglichen Leistungsübertragung des Wärmeträgers betrieben werden.

Dabei kann der Wärmeträger-Volumenstrom in dem Kreislaufverbundsystem auf der Basis von Temperaturmesswerten des Wärmeträgers vor dem Eintritt des Abluftvolumenstroms vor dem Eintritt in den/die Abluftwärmeübertrager und nach dem Austritt aus dem/den Abluftwärmeübertragern und einer Volumenstrommessung des Wärmeträger-Volumenstroms derart geregelt werden, dass bei Feststellung einer sich verringernden Leistungsübertragung mittels des Wärmeträgers der Wärmeträger-Volumenstrom mittels der Umwälzpumpe entgegen einer zuvor vorgenommenen Volumenstromänderung verändert wird.

Weiterhin kann das Kreislaufverbundsystem auf der Basis von Temperaturmessungen des Abluftvolumenstroms vor dessen Eintritt in den/die Abluftwärmeübertrager und nach dessen Austritt aus dem/den Abluftwärmeübertragern sowie des Zuluftvolumenstroms vor dessen Eintritt in den/ die Zuluftwärmeübertrager mit einem maximal möglichen Temperaturänderungsgrad in dem Abluftvolumenstrom betrieben werden.

Weiterhin kann das Kreislaufverbundsystem auf der Basis von Temperaturmessungen des Zuluftvolumenstroms vor dem Eintritt in den/die Zuluftwärmeübertrager und nach dem Austritt aus dem/den Zuluftwärmeübertragern sowie des Abluftvolumenstroms in den/die Abluftwärmeübertrager mit einem maximal möglichen Temperaturänderungsgrad in dem Zuluftvolumenstrom betrieben werden.

Dabei wird der Wärmeträger-Volumenstrom in dem Kreislaufverbundsystem auf der Basis von Temperaturmesswerten des Abluftvolumenstrom vor dem Eintritt in den/die Abluftwärmeübertrager und nach dem Austritt aus dem/den Abluftwärmeübertragern oder von Temperaturmesswerten des Zuluftvolumenstroms vor dem Eintritt in den/die Zuluftwärmeübertrager und nach dem Austritt aus dem/den Zuluftwärmeübertragern derart geregelt, dass bei Feststellung einer Verringerung eines Temperaturänderungsgrades im jeweiligen Luftvolumenstrom gegenüber einem maximal möglichen Temperaturänderungsgrad der Wärmeträger-Volumenstrom mittels der Umwälzpumpe entgegen einer zuvor vorgenommenen Volumenstromänderung verändert wird.

Eine zugehörige Vorrichtung weist in einer Wärmeträgerleitung einen Temperaturfühler vor dem Eintritt des Wärmeträgers in den/die Abluftwärmeübertrager und in einer Wärmeträgerleitung einen Temperaturfühler nach dem Austritt des Wärmeträgers aus dem/den Abluftwärmeübertragern auf. Weiterhin ist eine Volumenstrommesseinrichtung der Umwälzpumpe zugeordnet. Eine Regeleinrichtung ist in Verbindung mit den Temperaturfühlern, der Volumenstrommesseinrichtung und der Umwälzpumpe vorgesehen.

Die Verbindung ist so vorgesehen, dass auf Basis der festgestellten Messwerte mittels Veränderung des Wärmeträger-Volumenstroms eine steigende oder sinkende Leistungsübertragung des Wärmeträgers ausgeregelt wird.

Eine zweite Vorrichtung weist in einem ersten Luftvolumenstrom je einen Temperaturfühler vor dem Eintritt und nach dem Austritt des Volumenstroms aus den/die diesem zugeordneten Wärmeübertrager auf. Weiterhin ist ein Temperaturfühler nach dem Austritt aus dem/den Wärmeübertragern des jeweils anderen Luftvolumenstroms angeordnet. Eine Regeleinrichtung ist in Verbindung mit den Temperaturfühlern und der Umwälzpumpe vorgesehen, derart, dass auf Basis der festgestellten Messwerte mittels Veränderung des Wärmeträger-Volumenstroms ein sinkender Temperaturänderungsgrad des jeweils ersten Luftvolumenstroms ausgeregelt wird.

In Weiterbildung werden im Abluftvolumenstrom ein Temperaturfühler zur Erfassung einer Ablufttemperatur vor dem Eintritt und ein Temperaturfühler zur Erfassung einer Fortlufttemperatur nach dem Austritt des Abluftvolumenstroms aus dem/den Abluftwärmeübertragern vorgesehen. Ein weiterer Temperaturfühler zur Erfassung einer Außenlufttemperatur ist nach dem Austritt aus dem/den Zuluftwärmeübertragern des Zuluftvolumenstroms angeordnet. Die Temperaturfühler sind mit der Regeleinrichtung verbunden.

Weiterhin kann im Zuluftvolumenstrom ein Temperaturfühler zur Erfassung einer Außenlufttemperatur vor dem Eintritt und ein Temperaturfühler zur Erfassung einer Zulufttemperatur nach dem Austritt des Zuluftvolumenstroms aus dem/den Zuluftwärmeübertragern angeordnet werden. Ein weiterer Temperaturfühler zur Erfassung einer Fortlufttemperatur ist nach dem Austritt aus dem/den Abluftwärmeübertragern des Abluftvolumenstroms angeordnet. Die Temperaturfühler sind mit der Regeleinrichtung verbunden.

Die Vorrichtungen können in einem Multifunktionalem Kreislaufverbundsystem oder in einem Kreislaufverbundsystem für mehrere Lüftungsgeräte angeordnet. Die Vorrichtungen können auch für die Entfeuchtung eines Luftvolumenstroms verwendet werden.

Eine Vorrichtung ist aus mindestens einem Rohrleitungssystem, einer Umwälzpumpe, einem Frequenzumrichter, einem Durchflussmesser mit stetigem Ausgangssignal, mindestens zwei Temperaturfühler, sowie einer Messeinrichtung mit speicherprogrammierbarer Steuerung und stetigem Regler gebildet. Mit den beiden Temperaturfühlern wird die Eintrittstemperatur des Wärmeträgers in den Abluft-Wärmeübertrager sowie die Austrittstemperatur aus dem Abluft-Wärmeübertrager gemessen und an eine speicherprogrammierbare Steuerung (SPS) zur

Verarbeitung im Regelungsprozess übertragen. In der SPS wird die Leistung nach dem folgenden Zusammenhang ermittelt:

$$Q = V \times \varrho \times c \times \Delta t \,/3{,}6$$

Hierbei haben die Parameter folgende Bedeutung:

V = Volumenstrom; $\varrho$ = Dichte; c = spezifische Wärmekapazität;
$\Delta t$ = Temperaturdifferenz vor und nach dem Wärmeübertrager.

Mittels des stetigen Reglers wird dann über den Frequenzumrichter die Drehzahl der Umwälzpumpe verringert oder erhöht, so dass immer die höchstmögliche Leistung bei der Wärmerückgewinnung erzielt wird.

Wenn der stetige Regler den Volumenstrom des Wärmeträgers verringert und wenn sich dabei die Leistung ebenfalls verringert, wird der Wärmeträger-Volumenstrom vom Regler wieder erhöht. Erhöht der Regler den Wärmeträger-Volumenstrom und die Leistung wird geringer so wird der Regler den Wärmeträger-Volumenstrom wieder verringern.

Dabei können die Dichte $\varrho$ und die Wärmekapazität c als Konstanten in die Formel des zuvor beschriebenen Zusammenhangs eingesetzt werden. Andererseits ist es auch möglich mit Hilfe bekannter Zusammenhänge in Formeln für den verwendeten Wärmeträger und anhand der gemessenen Temperaturen die tatsächliche Dichte $\varrho$ und die tatsächliche Wärmekapazität c zu bestimmen und mit diesen Werten die Leistung zu berechnen. Wenn mit den gemessenen Temperaturen die Dichte $\varrho$ und die Wärmekapazität c des Wärmeträgers berechnet wird, erhält man den Wert der maximal erreichbaren Entzugsleistung, die aus der Abluft entnommen werden kann. Dieser Wert kann dann an einer Anzeigeeinrichtung anzeigt werden.

Weiterhin kann durch Maximierung des Temperaturänderungsgrades anstelle der Berechnung der Leistungsübertragung der optimale Wärmeträger-Volumenstrom ermittelt werden, wobei dies unabhängig von den Luft-Volumenströmen der Zuluft und der Abluft sowie der Feuchte in der Abluft erfolgt. Hierzu wird die Temperatur der Abluft, der Fortluft und der Außenluft gemessen und an eine SPS-Einrichtung (**S**peicher **P**rogrammierbare **S**teuerung) übertragen. Mit Hilfe der SPS-Einrichtung wird hierbei der Temperaturänderungsgrad $\Phi$ im Zusammenhang gemessener Temperaturänderungen für Abluft, Fortluft und Außenluft über die folgende Formel ermittelt:

$$\Phi = (t_{Abluft} - t_{Fortluft}) \,/\, (t_{Abluft} - t_{Außenluft})$$

Damit wird der größte Temperaturänderungsgrad ermittelt. Mittels eines stetigen Reglers wird dann über den Frequenzumrichter die Drehzahl der Umwälzpumpe verringert oder erhöht, so dass immer der größte Temperaturänderungsgrad erzielt wird. Wenn von dem stetigen Regler der Wärmeträger-Volumenstrom verringert wird und sich dabei der Temperaturänderungsgrad ebenfalls verringert, wird der Wärmeträger-Volumenstrom vom stetigen Regler wieder erhöht. Erhöht der stetige Regler den Wärmeträger-Volumenstrom und der Temperaturänderungsgrad wird danach kleiner, so wird der Wärmeträger-Volumenstrom vom stetigen Regler wieder verringert.

Die mit der Erfindung erzielbaren Vorteile bestehen unter anderem in den im Folgenden beschriebenen Wirkungen:

a) Der Massenstrom der Zuluft und der Abluft muss für die Bestimmung des Wärmeträger-Volumenstroms nicht mehr gemessen werden.
b) Die Abluftfeuchte muss für die Bestimmung des Wärmeträger-Volumenstroms nicht mehr gemessen werden.
c) Ungenauigkeiten bei der Messung und Berechnung der Wärmekapazitäten werden eliminiert.
d) Ungenauigkeiten bei der Messung und zur Berechnung der Zu- und Abluftvolumenströme durch systembedingt vorliegende Toleranzen werden eliminiert.

e) Es können mehrere Lüftungsgeräte an ein einziges Kreislaufverbundsystem angeschlossen werden.

f) Auch bei der Einkoppelung von Wärme und Kälte wird stets der optimale Wärmeträger-Volumenstrom ermittelt.

g) Der messtechnische Aufwand ist insgesamt geringer.

h) Die Wärmerückgewinnung aus der Abluft wird maximiert.

i) Die Kälterückgewinnung aus der Abluft wird maximiert.

j) Das Verfahren kann auch bei multifunktionalen Kreislaufverbundsystemen angewandt werden.

k) Änderungen der inneren Wärmeübergangzahl bei verringerter Strömungsgeschwindigkeit des Wärmeträgers werden automatisch mitberücksichtigt.

Ein Ausführungsbeispiel der Erfindung ist im Folgenden anhand von Zeichnungen beispielhaft dargestellt. Dabei zeigen

**Figur** 1     eine Anordnung zur Regelung eines Wärmeträger-Volumenstroms über eine maximal mögliche Wärmeträger-Leistungsübertragung,

**Figur** 2     eine Anordnung zur Regelung eines Wärmeträger-Volumenstroms über einen maximal möglichen Temperaturänderungsgrad,

**Figur** 3     eine weitere Ausführungsform der Anordnung nach **Figur** 1,

**Figur** 4     eine weitere Ausführungsform der Anordnung nach **Figur** 2,

**Figur** 5     eine Anordnung zur Regelung eines Wärmeträger-Volumenstroms über einen maximal möglichen Temperaturänderungsgrad,

**Figur** 6     ein Ablaufschema eines Regelvorgangs auf Basis von Temperaturmessungen des Wärmeträgers,

**Figur** 7     ein Ablaufschema eines Regelvorgangs auf Basis von Temperaturmessungen des Abluftvolumenstroms und des Zuluftvolumenstroms und

**Figur** 8     eine erfindungsgemäße Anordnung zur Regelung eines Wärmeträger-Volumenstroms über einen maximal möglichen Temperaturänderungsgrad in gekoppelten Kreislaufverbundsystemen.

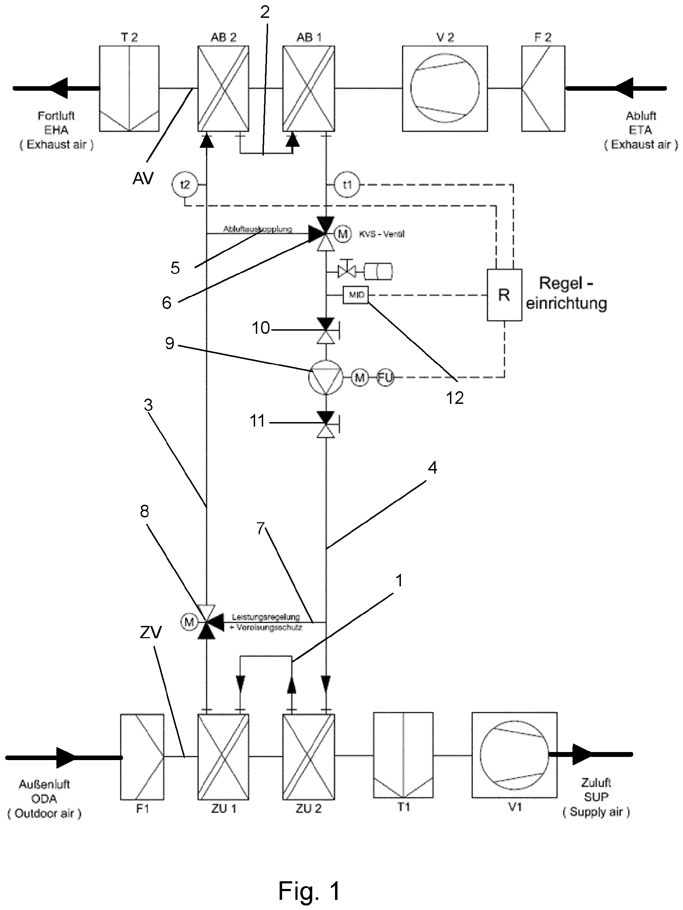

In **Figur** 1 ist eine Anordnung eines Kreislaufverbundsystems gezeigt. Das Kreislaufverbundsystem weist im Zuluftvolumenstrom ZV zwischen einer Zuführung von Außenluft und einer Abführung von Zuluft zwei Zuluftwärmeübertrager ZU1 und ZU2 auf. Diese sind mittels einer Wärmeträgerleitung 1 entgegen der Strömungsrichtung des Zuluftvolumenstroms ZV in Reihe geschaltet. Den Zuluftwärmeübertragern ZU1, ZU2 ist im Zuluftvolumenstrom ZV ein Filter F1 im Zuluftvolumenstrom ZV vorgeschaltet und es sind ein Tropfenabscheider T1 und ein Zuluftventilator V1 nachgeschaltet.

Das Kreislaufverbundsystem weist im Abluftvolumenstrom AV zwischen einer Zuführung von Abluft und einer Abführung von Fortluft zwei Abluftwärmeübertrager AB1 und AB2 auf. Diese sind mittels einer Wärmeträgerleitung 2 entgegen der Strömungsrichtung des Abluftvolumenstroms AV in Reihe geschaltet. Den Abluftwärmeübertragern AB1, AB2 sind im Abluftvolumenstrom AV ein Filter F2 und ein Abluftventilator V1 im Abluftvolumenstrom AV vorgeschaltet und es ist ein Tropfenabscheider T2 nachgeschaltet.

Der Zuluftwärmeübertrager ZU1 und der Abluftwärmeübertrager AB2 sind mittels einer Wärmeträgerleitung 3 in einer Strömungsrichtung zum Abluftwärmeübertrager AB2 hin miteinander verbunden.

Der Zuluftwärmeübertrager ZU2 und der Abluftwärmeübertrager AB1 sind mittels einer Wärmeträgerleitung 4 in einer Strömungsrichtung zum Zuluftwärmeübertrager ZU2 hin miteinander verbunden.

Die Wärmeträgerleitungen 3, 4 sind durch eine Leitung 5 zur Abluftauskopplung in Strömungsrichtung zur Wärmeträgerleitung 4 gekoppelt. Die Leitung 5 ist durch ein motorisch regelbares KVS-Ventil 6 in die Wärmeträgerleitung 4 eingekoppelt.

Die Wärmeträgerleitungen 3, 4 sind weiterhin durch eine Leitung 7 zur Leistungsregelung und zum Vereisungsschutz in Strömungsrichtung zur Wärmeträgerleitung 3 gekoppelt. Die Leitung 7 ist durch ein motorisch regelbares Ventil 8 in die Wärmeträgerleitung 3 eingekoppelt.

In die Wärmeträgerleitung 4 ist weiterhin eine Umwälzpumpe 9 mit einer Förderrichtung von dem Abluftwärmeübertrager AB1 zum Zuluftwärmeübertrager ZU2 angeordnet. Die Umwälzpumpe 9 fördert den Wärmeträger durch die Zuluftwärmeübertrager ZU1, ZU2, das Ventil 8, die Abluftwärmeübertrager AB2, AB1und das KVS-Ventil 6 wieder zur Umwälzpumpe 9. In der Wärmeträgerleitung 4 ist der Umwälzpumpe 9 ein Absperrventil 10 vorgeordnet und ein Absperrventil 11 nachgeordnet.

Diese gerätetechnischen Zusammenhänge gelten auch im Wesentlichen für die **Figur**en 2 bis 4.

**Figur** 1 ist in der Wärmeträgerleitung 3 ein Temperaturfühler t2 vor dem Eintritt des Wärmeträgers in den Abluftwärmeübertrager AB2 und in der Wärmeträgerleitung 4 ein Temperaturfühler t2 nach dem Austritt des Wärmeträgers aus dem Abluftwärmeübertrager AB1 angeordnet. In der Wärmeträgerleitung 4 ist weiterhin eine Volumenstrommesseinrichtung (Durchflussmesser) 12 für den geförderten Wärmeträger vorgesehen. Die Volumenstrommesseinrichtung (Durchflussmesser) 12 ist hier zwischen dem KVS-Ventil 6 und der Umwälzpumpe 9 angeordnet.

Weiterhin ist eine Regeleinrichtung R in Verbindung mit der Umwälzpumpe 9 und der eine Volumenstrommesseinrichtung (Durchflussmesser) 12, sowie den Temperaturfühlern t1 und t2 dargestellt.

Die Temperaturfühler t2 und t1 sowie die Volumenstrommesseinrichtung (Durchflussmesser) 12 werden mittels der Regeleinrichtung R auf einen hier nicht näher dargestellten stetigen Regler geschaltet. Mit dem stetigen Regler wird der Wärmeträger-Volumenstrom über die Umwälzpumpe 9 verändert, wobei dieser entweder verringert oder erhöht werden kann. Mittels des stetigen Reglers wird die Temperaturdifferenz an den Temperaturfühlern t1 und t2 ermittelt und die übertragene Leistung berechnet.

Fördert die Umwälzpumpe 9 zu wenig Wärmeträger, so sinkt die übertragene Leistung, weil zu wenig Wärmeträger-Volumenstrom zur Wärmeübertragung gefördert wird. Daraufhin wird der Wärmeträger-Volumenstrom durch die Regeleinrichtung R mittels der Umwälzpumpe 9 wieder erhöht.

Fördert die Umwälzpumpe 9 hingegen zu viel Wärmeträger wird die gemessene Temperaturdifferenz zwischen den Temperaturfühlern t1 und t2 geringer und die übertragene Leistung sinkt wiederum ab. Daraufhin wird der Wärmeträger-Volumenstrom durch die Regeleinrichtung R mittels der Umwälzpumpe 9 wieder verringert.

Wird dieser Wirkzusammenhang von einem PI-Regler geregelt schwingt sich der Wärmeträger-Volumenstrom kurzfristig auf einen stabilen Wert ein und die übertragene Leistung schwankt immer weniger, bis fast kein schwingen mehr erkennbar ist.

Mittels des KVS-Ventils 6 kann der Wärmeträger über die Leitung 5 an den Wärmeübertragern AB2 und AB1 vorbeigeführt werden, wenn aus dem Abluftvolumenstrom AV mehr Energie entnommen werden kann als im Zuluftvolumenstrom ZV benötigt wird.

Das KVS-Ventil 6 wird zu diesem Zweck mit Hilfe einer zusätzlichen, hier nicht dargestellten Messung der Zulufttemperatur geregelt.

Das Ventil 8 für den Vereisungsschutz wird über die Messung des Temperaturfühlers t2 oder über einen hier nicht dargestellten Differenzdruckmesser, der den Differenzdruck über die Abluftwärmeübertrager AB2 und AB1 misst, geregelt.

Weiterhin kann ein erster weiterer hier nicht dargestellter Temperaturfühler in dem Abluftvolumenstrom AV vor dem Eintritt in die Abluftwärmeübertrager AB1, AB2 eingesetzt werden. Ein weiterer zweiter, ebenfalls hier nicht dargestellter Temperaturfühler kann dann vor den Zuluftwärmeübertragern ZU1, ZU2 im Zuluftvolumenstrom ZV eingesetzt werden. Diese Anordnung wird gewählt, wenn mit der Einrichtung auch Kälterückgewinnung betrieben werden soll. Ist die Temperatur vor den Zuluftwärmeübertragern ZU1, ZU2 höher als die Temperatur vor den Abluftwärmeübertragern AB1, AB2 wird der Wärmeübertrager im Kühlfall durch alle Wärmeübertrager geleitet.

Ist die Ablufttemperatur im Kühlfall vor den Abluftwärmeübertragern AB1, AB2 höher als die Zulufttemperatur vor den Zuluftwärmeübertragern ZU1, ZU2 wird der Wärmeträger mittels des KVS-Ventils 6 über die Leitung 5 als Bypass zur Abluftauskopplung geleitet.

Sind im Heizfall die vorgesehenen Wärmeübertrager so effektiv, dass der Zuluftvolumenstrom ZV auf Grund einer zu großen Energiezufuhr aus dem Abluftvolumenstrom AV für die bestehenden Anforderungen zu warm werden könnte, kommt ein weiterer dritter hier nicht dargestellter Temperaturfühler nach den Zuluftwärmeübertragern ZU1, ZU2 im Zuluftvolumenstrom ZV zum Einsatz.

Unter Verwendung der zuvor benannten Temperaturmessungen und mittels der Regeleinrichtung R kann ebenfalls ein Anteil des Wärmeträgers durch die Leitung 5 als den Bypass zur Abluftauskopplung geführt werden.

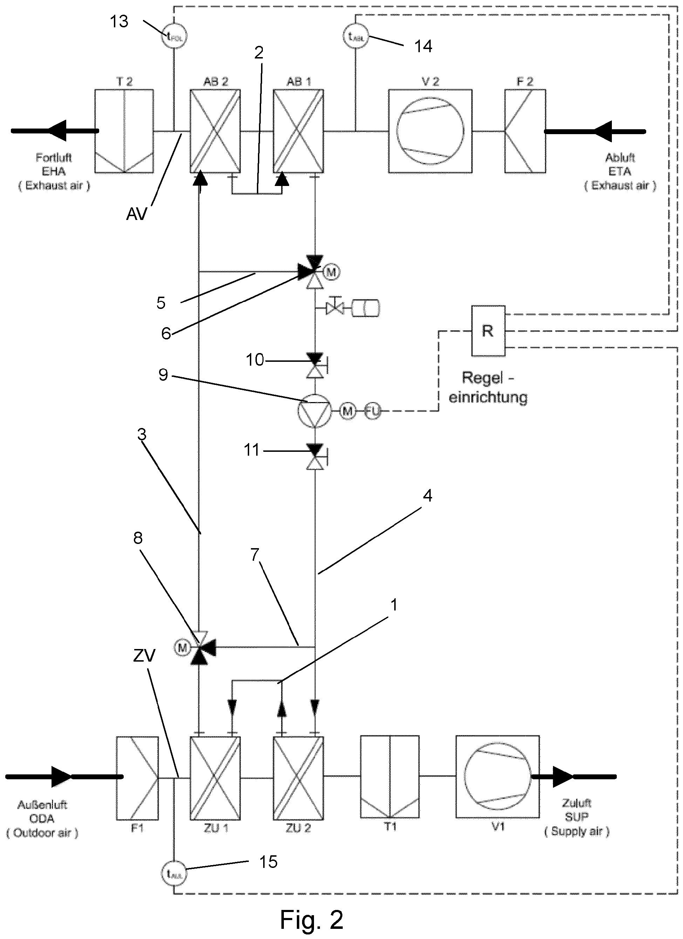

In **Figur** 2 ist eine weitere Anordnung eines Kreislaufverbundsystems dargestellt, wobei hier eine Regelung des Wärmeträger-Volumenstroms über einen maximal möglichen Temperaturänderungsgrad zwischen dem Abluftvolumenstrom AV und dem Zuluftvolumenstrom ZV vorgesehen ist. Der oben genannte Temperaturänderungsgrad wird auch als Rückwärmzahl bezeichnet.

Die Umwälzpumpe 9 fördert hierbei wiederum den Wärmeträger durch die Zuluftwärmeübertrager ZU1, ZU2, das Ventil 8 für den Vereisungsschutz, durch die Abluftwärmeübertrager AB2, AB1und das KVS-Ventil 6 wieder zur Umwälzpumpe 9 zurück.

In **Figur** 2 ist ein Temperaturfühler 13 zur Erfassung einer Fortlufttemperatur $t_{FOL}$ im Abluftvolumenstrom AV in dessen Strömungsrichtung nach dem Abluftwärmeübertrager AB2 angeordnet.

Weiterhin ist ein Temperaturfühler 14 zur Erfassung einer Ablufttemperatur $t_{ABL}$ im Abluftvolumenstrom AV in dessen Strömungsrichtung vor dem Abluftwärmeübertrager AB1 angeordnet.

Weiterhin ist ein Temperaturfühler 15 zur Erfassung einer Außenlufttemperatur $t_{AUS}$ im Zuluftvolumenstrom ZV in dessen Strömungsrichtung vor dem Zuluftwärmeübertrager ZU1 angeordnet.

Die Messwerte der Temperaturfühler 13, 14, 15 werden der Regeleinrichtung R zugeleitet, mittels der diese Messwerte auf einen stetigen Regler aufgeschaltet werden. Mit dem stetigen Regler wird der Wärmeträger-Volumenstrom mittels der Umwälzpumpe 9 verändert, wobei dieser entweder verringert oder erhöht werden kann. Mittels des stetigen Reglers werden die Temperaturmesswerte $t_{FOL}$, $t_{ABL}$ und $t_{AUS}$ von den Temperaturfühlern 13, 14, 15 erfasst und es wird ein daraus sich ergebender Temperaturänderungsgrad berechnet.

Fördert hier die Umwälzpumpe 9 zu wenig Wärmeträger, so wird der aus den Temperaturmesswerten $t_{FOL}$,

$t_{ABL}$ und $t_{AUS}$ berechneteTemperaturänderungsgrad der Luftvolumenströme kleiner, weil zu wenig Wärmeträger-Volumenstrom gefördert und somit zu wenig Leistung übertragen wird. Daraufhin wird der Wärmeträger-Volumenstrom mittels der Umwälzpumpe 9 wieder erhöht.

Wenn hingegen die Umwälzpumpe 9 zu viel Wärmeträger fördert, wird der aus den Temperaturmessewerten $t_{FOL}$, $t_{ABL}$ und $t_{AUS}$ berechnete Temperaturänderungsgrad der Luftvolumenströme ebenfalls kleiner, woraus sich ergibt, dass die Rückwärmleistung (Rückwärmzahl) sinkt. Daraufhin wird der Wärmeträger-Volumenstrom mittels der Umwälzpumpe 9 wieder verringert.

Wird dieser Prozess der Wärmeübertragung von einem PI-Regler geregelt und dabei beobachtet, ob sich der Wärmeträger-Volumenstrom verkleinert oder vergrößert, schwingt sich der Wärmeträger-Volumenstrom schnell ein und die übertragene Leistung schwankt ständig weniger bis fast kein Schwingen mehr erkennbar ist.

Mittels des KVS-Ventils 6 wird der Wärmeträger an den Abluftwärmeübertragern AB2 und AB1 vorbeigeführt, wenn aus dem Abluftvolumenstrom AV mehr Energie entnommen werden kann als im Zuluftvolumenstrom ZV nach den Vorgaben für die Luftbehandlung benötigt wird. Das KVS-Ventil 6 wird mit Hilfe von Messwerten der Zulufttemperatur geregelt.

Das Ventil 8 für den Vereisungsschutz wird über die Messung des Temperaturfühlers t2 oder über einen hier nicht dargestellten Differenzdruckmesser, der den Differenzdruck über die Abluftwärmeübertrager AB2 und AB1 misst, geregelt.

Weiterhin kann in der Anordnung nach **Figur** 2 ein weiterer hier nicht dargestellter Temperaturfühler vor dem Eintritt in die Zuluftwärmeübertrager ZU1, ZU2 im Zuluftvolumenstrom ZV eingesetzt werden, wenn mit der Einrichtung auch Kälterückgewinnung betrieben werden soll.

Ist die Temperatur vor den Zuluftwärmeübertrager ZU1 höher als die Ablufttemperatur $t_{ABL}$ vor dem Abluftwärmeübertrager AB1 wird der Wärmeübertrager im Kühlfall durch alle Wärmeübertrager geleitet

Ist die Ablufttemperatur $t_{ABL}$ im Kühlfall höher als die Temperatur vor dem Zuluftwärmeübertrager ZU1 wird der Wärmeübertrager über die Leitung 5 als Bypass zur Abluftauskopplung geleitet.

Sind im Heizfall die eingesetzten Wärmeübertrager so effektiv, dass der Zuluftvolumenstrom ZV auf Grund einer zu großen Energiezufuhr aus dem Abluftvolumenstrom AV zu warm werden könnte, kann in der Anordnung nach **Figur** 2 ein weiterer hier nicht dargestellter Temperaturfühler nach den Zuluftwärmeübertragern ZU1, ZU2 im Zuluftvolumenstrom ZV zum Einsatz kommen.

Unter Verwendung der zuvor benannten Temperaturmessungen und mittels der Regeleinrichtung R kann ebenfalls ein Anteil des Wärmeträgers durch die Leitung 5 als Bypass zur Abluftauskopplung geführt werden.

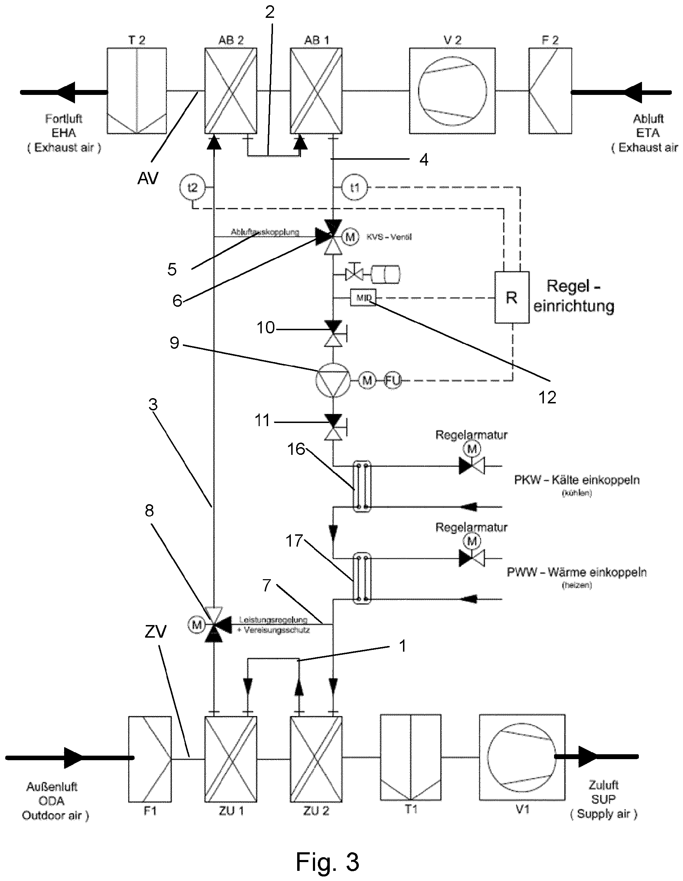

In **Figur** 3 ist eine Anordnung eines Kreislaufverbundsystems mit einem Temperaturfühler t2 vor dem Eintritt in den Abluftwärmeübertrager AB2 und einem Temperaturfühler t1 nach dem Austritt aus dem Abluftwärmeübertrager AB1, wie in **Figur** 1 beschrieben, gezeigt.

Jedoch besteht hier die Möglichkeit Kälte aus einem Kaltfluidnetz einzukoppeln oder auch Wärme aus einem Warmwassernetz einzukoppeln.

Hierzu ist in die Wärmeträgerleitung 4 ein Wärmeübertrager 16 eingekoppelt. Der Wärmeübertrager 16 ist weiterhin mit einer Leitung 18 für Pumpenkaltwasser PKW gekoppelt. Damit kann über den Wärmeübertrager 16 Kälteenergie in das Kreislaufverbundsystem an der Wärmeträgerleitung 4 übertragen werden bzw. der Wärmeträger kann mittels des Wärmeübertragers 16 gekühlt werden.

Weiterhin ist in die Wärmeträgerleitung 4 ein Wärmeübertrager 17 eingekoppelt. Der Wärmeübertrager 17 ist weiterhin mit einer Leitung 19 für Pumpenwarmwasser PWW gekoppelt. Damit kann über den Wärmeübertrager 16 Wärmeenergie in das Kreislaufverbundsystem an der Wärmeträgerleitung 4 übertragen werden bzw. der Wärmeträger kann mittels des Wärmeübertragers 17 aufgeheizt werden.

Das Maß der Wärmerückgewinnung aus dem Abluftvolumenstrom AV wird durch dieses Verfahren etwas geringer, aber es wird ein großer Anteil der elektrischen Energie für den Zuluftventilator V1 eingespart, weil es für zusätzliche Kühlung oder Heizung nicht erforderlich ist, einen zusätzlichen Kühler oder Erhitzer in dem Zuluftvolumenstrom ZV anzuordnen.

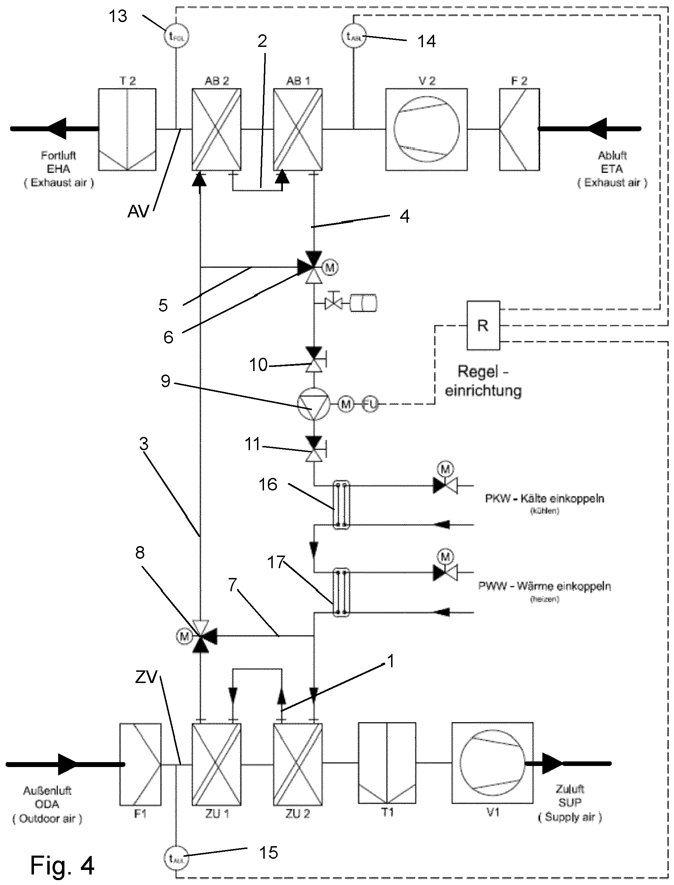

In **Figur** 4 ist eine Anordnung eines Kreislaufverbundsystems mit einer Regelung des Wärmeträger-Volumenstroms auf der Basis eines maximal möglichen Temperaturänderungsgrades des Abluftvolumenstroms AV dargestellt, wie dies anhand von **Figur** 2 beschrieben ist.

Hier besteht jedoch entsprechend **Figur** 3 die Möglichkeit Kälte aus einem Kaltfluidnetz einzukoppeln oder auch Wärme aus einem Warmwassernetz einzukoppeln.

Hierzu ist in die Wärmeträgerleitung 4 ein Wärmeübertrager 16 eingekoppelt. Der Wärmeübertrager 16 ist weiterhin mit einer Leitung 18 für Pumpenkaltwasser PKW gekoppelt. Damit kann über den Wärmeübertrager 16 Kälteenergie in das Kreislaufverbundsystem an der Wärmeträgerleitung 4 übertragen werden bzw. der Wärmeträger kann mittels des Wärmeübertragers 16 gekühlt werden.

Weiterhin ist in die Wärmeträgerleitung 4 ein Wärmeübertrager 17 eingekoppelt. Der Wärmeübertrager 17 ist auch mit einer Leitung 19 für Pumpenwarmwasser PWW gekoppelt. So kann über den Wärmeübertrager 16 Wärmeenergie in das Kreislaufverbundsystem an der Wärmeträgerleitung 4 übertragen werden bzw. der Wärmeträger kann mittels des Wärmeübertragers 17 aufgeheizt werden.

Das Maß der Wärmerückgewinnung aus dem Abluftvolumenstrom AV wird dadurch etwas geringer, aber es wird ein großer Anteil der elektrischen Energie für den Zuluftventilator V1 eingespart, weil es für zusätzliche Kühlung oder Heizung nicht erforderlich ist, einen zusätzlichen Kühler oder Erhitzer in dem Zuluftvolumenstrom ZV anzuordnen.

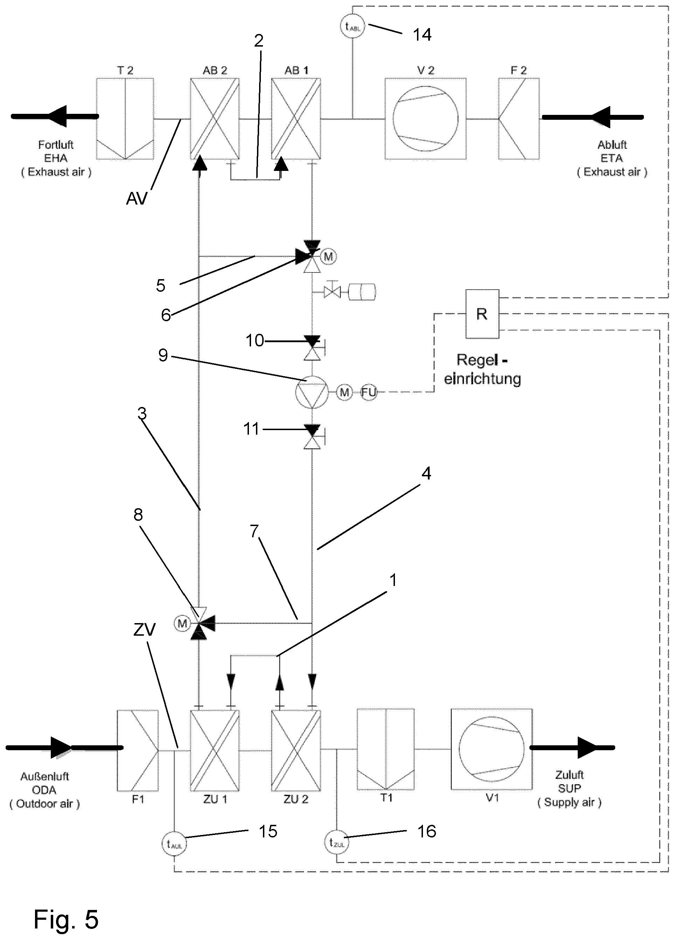

In **Figur** 5 ist eine weitere Anordnung eines Kreislaufverbundsystems dargestellt, wobei hier eine Regelung des Wärmeträger-Volumenstroms über einen maximal möglichen Temperaturänderungsgrad zwischen dem Zuluftvolumenstrom ZV und dem Abluftvolumenstrom AV vorgesehen ist. Der oben genannte Temperaturänderungsgrad wird auch als Rückwärmzahl RWZ bezeichnet.

Die Umwälzpumpe 9 fördert hierbei wiederum den Wärmeträger durch die Zuluftwärmeübertrager ZU1, ZU2, das Ventil 8 für den Vereisungsschutz, durch die Abluftwärmeübertrager AB2, AB1und das KVS-Ventil 6 wieder zur Umwälzpumpe 9 zurück.

In **Figur** 5 ist ein Temperaturfühler 15 zur Erfassung einer Außenlufttemperatur $t_{AUS}$ im Zuluftvolumenstrom ZV in dessen Strömungsrichtung vor dem Zuluftwärmeübertrager ZU1 angeordnet.

Weiterhin ist ein Temperaturfühler 16 zur Erfassung einer Zulufttemperatur $t_{ZUL}$ im Zuluftvolumenstrom ZV in dessen Strömungsrichtung vor dem Zuluftwärmeübertrager ZU1 angeordnet.

Weiterhin ist Temperaturfühler 13 zur Erfassung einer Ablufttemperatur $t_{ABL}$ im Abluftvolumenstrom AV in dessen Strömungsrichtung vor dem Abluftwärmeübertrager AB1 angeordnet.

Die Messwerte der Temperaturfühler 15, 16, 13 werden der Regeleinrichtung R zugeleitet. Mittels der Regeleinrichtung R werden diese Messwerte auf einen stetigen Regler geschaltet. Mit dem stetigen Regler wird der Wärmeträger-Volumenstrom mittels der Umwälzpumpe 9 verändert, wobei dieser entweder verringert oder erhöht werden kann. Mittels des stetigen Reglers werden die Temperaturmessewerte $t_{ZUL}$, $t_{ABL}$ und $t_{AUS}$ von den Temperaturfühlern 15, 16, 13 erfasst und es wird ein daraus sich ergebender Temperaturänderungsgrad berechnet.

Fördert hier die Umwälzpumpe 9 zu wenig Wärmeträger, so wird der aus den Temperaturmessewerten $t_{ZUL}$, $t_{ABL}$ und $t_{AUS}$ berechnete Temperaturänderungsgrad der Luftvolumenströme ZV, AV kleiner, weil zu wenig Wärmeträger-Volumenstrom gefördert und somit zu wenig Leistung übertragen wird. Daraufhin wird der Wärmeträger-Volumenstrom mittels der Umwälzpumpe 9 wieder erhöht.

Wenn hingegen die Umwälzpumpe 9 zu viel Wärmeträger fördert, wird der aus den Temperaturmessewerten $t_{ZUL}$, $t_{ABL}$ und $t_{AUS}$ berechnete Temperaturänderungsgrad der Luftvolumenströme ebenfalls kleiner, woraus sich ergibt, dass die Rückwärmleistung (Rückwärmzahl) sinkt. Daraufhin wird der Wärmeträger-Volumenstrom mittels der Umwälzpumpe 9 wieder verringert.

Wird dieser Prozess der Wärmeübertragung von einem PI-Regler geregelt und dabei beobachtet, ob sich der Wärmeträger-Volumenstrom verkleinert oder vergrößert, schwingt sich der Wärmeträger-Volumenstrom schnell ein und die übertragene Leistung schwankt ständig weniger bis fast kein Schwingen mehr erkennbar ist.

Mittels des KVS-Ventils 6 wird der Wärmeträger an den Abluftwärmeübertragern AB2 und AB1 vorbeigeführt, wenn aus dem Abluftvolumenstrom AV mehr Energie entnommen werden kann als im Zuluftvolumenstrom ZV nach den Vorgaben für die Luftbehandlung benötigt wird. Das KVS-Ventil 6 wird mit Hilfe von Messwerten der Zulufttemperatur geregelt.

Das Ventil 8 für den Vereisungsschutz wird über die Messung des Temperaturfühlers t2 oder über einen hier nicht dargestellten Differenzdruckmesser, der den Differenzdruck über die Abluftwärmeübertrager AB2 und AB1 misst, geregelt.

Weiterhin kann in der Anordnung nach **Figur** 2 ein weiterer hier nicht dargestellter Temperaturfühler vor dem Eintritt in die Zuluftwärmeübertrager ZU1, ZU2 im Zuluftvolumenstrom ZV eingesetzt werden, wenn mit der Einrichtung auch Kälterückgewinnung betrieben werden soll.

Ist die Temperatur vor den Zuluftwärmeübertrager ZU1 höher als die Ablufttemperatur $t_{ABL}$ vor dem Abluftwärmeübertrager AB1 wird der Wärmeübertrager im Kühlfall durch alle Wärmeübertrager geleitet

Ist die Ablufttemperatur $t_{ABL}$ im Kühlfall höher als die Temperatur vor dem Zuluftwärmeübertrager ZU1 wird der Wärmeübertrager über die Leitung 5 als Bypass zur Abluftauskopplung geleitet.

Sind im Heizfall die eingesetzten Wärmeübertrager so effektiv, dass der Zuluftvolumenstrom ZV auf Grund einer zu großen Energiezufuhr aus dem Abluftvolumenstrom AV zu warm werden könnte, kann in der Anordnung nach **Figur** 2 ein weiterer hier nicht dargestellter Temperaturfühler nach den Zuluftwärmeübertragern ZU1, ZU2 im Zuluftvolumenstrom ZV zum Einsatz kommen.

Unter Verwendung der zuvor benannten Temperaturmessungen und mittels der Regeleinrichtung R kann ebenfalls ein Anteil des Wärmeträgers durch die Leitung 5 als Bypass zur Abluftauskopplung geführt werden.

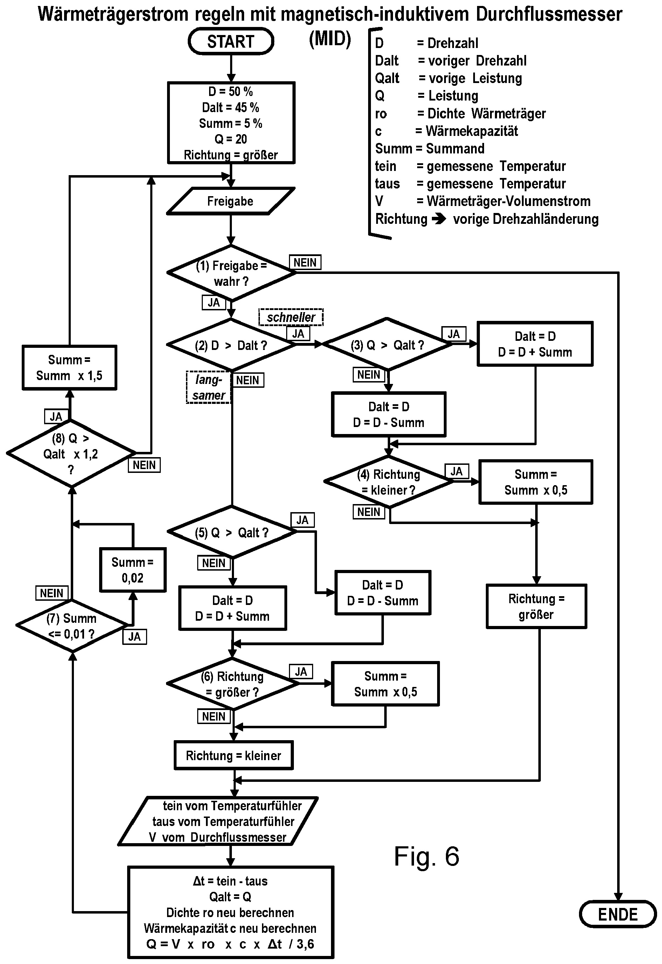

In **Figur** 6 ist ein mögliches Regelschema für ein Verfahren unter Einbeziehung von Temperaturmessungen des Wärmeträgers und einer Volumenstrommessung nach dem Verfahren der magnetisch-induktiven Volumenmessung MID dargestellt.

Zunächst sind die zur Verwendung innerhalb des Verfahrens vorgesehenen Parameter genannt. Dies sind:

D         als bekannte oder eingestellte Drehzahl der Umwälzpumpe 9

Dalt      als jeweils vorher eingestellte Drehzahl der Umwälzpumpe 9

Qalt      als vorherige Leistung

Qneu    als neu berechnete Leistung

ro        als Dichte des Wärmeträgers

c         als spezifische Wärmekapazität des Wärmeträgers

Summ  als jeweils anzuwendender Summand

tein      als gemessene Eintrittstemperatur des Wärmeträgers an den Abluftwärmeübertragern AB1, AB2

taus      als gemessene Austrittstemperatur des Wärmeträgers nach den Abluftwärmeübertragern AB1, AB2

V        als gemessener Volumenstrom des Wärmeträger-Volumenstroms

Richtung  als durchlaufende Variable der Änderungsrichtung der Drehzahl der Umwälzpumpe zwischen D und Dalt.

Der Regelprozess wird mit festlegten Parametern D, Dalt, Summ, Q und der Richtungsvorgabe [GRÖSSER] für das Verhältnis der Drehzahlen D, Dalt der Umwälzpumpe 9 gestartet. Diese Vorgabewerte werden auf Grund von Erfahrungswerten ausgewählt.

Damit kann die Regelung freigegeben werden. Diese Freigabe erfolgt auf der Basis von Einschaltsignalen zur Inbetriebnahme des Kreislaufverbundsystems, die vom Betreiber ausgeführt oder mittels einer Steuerung zeitabhängig vorgenommen werden können.

Im Folgenden wird bei der Beschreibung des Ablaufes des Regelprozesses jeweils angegeben wie der Regelprozess mit den Prozessdaten weitergeleitet wird, wobei jeweils nur der Begriff Prozess für Weiterleitung verwendet wird.

Vom Startpunkt aus wird also der Prozess über die Vorgabe [FREIGABE] an eine Verzweigungsstelle [1] geleitet. Dort wird der Wert [FREIGABE] überprüft und über den Ausgang [JA] wird der Prozess zu einer Verzweigungsstelle [2] geleitet, in der ein Vergleich der Drehzahlen D und Dalt erfolgt.

Wenn zwischenzeitlich der Regelprozess abgebrochen werden soll, weil die Anlage aus verschiedenen Gründen stillgesetzt werden soll, wird der Prozess in der Verzweigungsstelle [1] über den Ausgang [NEIN] zum Regelungsende geleitet.

In der Verzweigungsstelle [2] wird der Prozess auf Basis der Vorgabewerte D/Dalt in Richtung [JA] zu einer Verzweigungsstelle [3] weitergeleitet.

Für den Vergleich der übertragenen Leistungen liegt für Q noch kein Vergleichswert vor. Daher ist Q größer als Qalt und der Prozess wird in der Verzweigungsstelle [3] über den Ausgang [JA] zu einem Verrechnungspunkt geführt. Dort wird die Drehzahl Dalt der Umwälzpumpe 9 durch den Wert von D ersetzt und der Wert von D wird um den Summanden erhöht. Die neuen Werte werden dem Prozess nach dem Ausgang [NEIN] der Verzweigungsstelle [3] wieder zugeführt und einer nächsten Verzweigungsstelle [4] zugeleitet.

Da nun eine Erhöhung der Drehzahl D erfolgen soll, ist als Variable Richtung [GRÖSSER] anzunehmen und der Prozess wird in der Verzweigungsstelle [4] bei Abfrage der Richtung zum Ausgang [NEIN] durchgeleitet und dem Prozess mit der Variablen Richtung als [GRÖSSER] zugeführt.

Die Prozessdaten werden dem Prozess danach vor der Erfassung der Temperaturen tein und taus sowie des Volumenstroms V vom Volumenstrommessgerät wieder zugeführt.

Davon ausgehend wird der Prozess inklusive der Temperaturmesswerte tein, taus und dem Volumenstrom V einer Leistungsrechnung zugeführt.

Hier wird aus tein und taus ein Δt berechnet. Der Wert Qalt wird durch den bekannten Wert Q ersetzt. Die Dichte ro sowie die spezifische Wärmekapazität c des Wärmeträgers können neu berechnet werden.

Danach wird die Leistung nach der folgenden Formel neu berechnet:

$$Q = V * ro * c * \Delta t / 3{,}6$$

Von der Leistungsrechnung wird der Prozess einer Verzweigungsstelle [7] zugeleitet. In der Verzweigungsstelle [7] wird der Summand SUMM auf eine übermäßige Verringerung gegenüber dem Wert 0,01 geprüft. Wird dieser Wert erreicht oder unterschritten wird hier der Summand SUMM auf 0,02 vergrößert.

Danach wird der Prozess einer Verzweigungsstelle [8] zugeleitet.

In der Verzweigungsstelle [8] wird die Leistung Q auf eine übermäßige Erhöhung gegenüber einem mit dem Faktor 1,2 erhöhten Wert der Leistung Qalt geprüft. Dies ist für den Fall einer Änderung der Prozessrahmendaten, etwa bei einem zwischenzeitlich erhöhten Abluftvolumenstrom AV notwendig, um schneller in den gewünschten Regelbereich zu kommen. Dazu würde hier der Summand SUMM vergrößert.

Im normalen Regelprozess wird der Prozess am Ausgang [NEIN] der Verzweigungsstelle [8] weitergeleitet und dem Regelprozess vor der Verzweigungsstelle [1] wieder zugeführt.

Wenn immer noch das Signal [FREIGABE] vorliegt wird der Prozess wieder zu der Verzweigungsstelle [2] geleitet. Da nun die aktuelle Drehzahl D immer noch größer ist als die vorherige Drehzahl Dalt wird der Prozess wieder über den Ausgang [JA] zu der Verzweigungsstelle [3] geleitet.

Im aktuellen Regelprozess gibt es von der Verzweigungsstelle [3] ausgehend die folgenden Möglichkeiten zur Weiterführung des Regelprozesses:

a) Die aktuelle Leistung Q ist größer als die vorherige Leistung Qalt. Dann wird über den Ausgang [JA] wie bereits beschrieben die Drehzahl D um den Summanden erhöht. Die Variable Richtung ist wieder [GRÖSSER].

b) Die aktuelle Leistung Q ist kleiner als die vorherige Leistung Qalt. Dann wird über den Ausgang [NEIN] die Drehzahl D in einem Verrechnungspunkt um den Summanden verringert.

Wenn danach die Variable Richtung [KLEINER] ist, wird der Prozess über den Ausgang [JA] zu einem weiteren Verrechnungspunkt weitergeleitet. Dort wird der Summand mit dem Faktor 0,5 verringert.

Der Prozess wird danach mit der Variablen Richtung als [GRÖSSER] weitergeleitet. Die Variable Richtung bleibt bei [GRÖSSER].

Danach erfolgt erneut die Zuführung des Prozesses mit den Temperaturmessungen und der Volumenstrommessung zur Leistungsrechnung und über die Verzweigungsstellen [7] und [8] zurück zum Beginn des Regelprozesses und bei [FREIGABE] auf die Verzweigungsstellen [1] und [2] geführt.

An der Verzweigungsstelle [2] ist nun die Drehzahl D nach der vorherigen Ermittlung a) größer oder schneller als Dalt und nach der vorherigen Ermittlung b) ist die Drehzahl D kleiner oder langsamer als Dalt.

Daraus ergeben sich zwei Alternativen zur Weiterführung des Regelprozesses, wobei die Variable Richtung entsprechend ihrer vorherigen Festlegung auf den Wert [GRÖSSER] oder [KLEINER] verarbeitet wird.

Ist D nach a) schneller als Dalt wird in der Verzweigungsstelle [2] der Prozess über den Ausgang [JA] zur Verzweigungsstelle [3] geleitet. Dort werden wiederum die Ermittlungsvarianten a) und b) abgearbeitet und der Prozess wird mit der Variablen Richtung als [GRÖSSER] der Leistungsrechnung zugeführt. Dieser Wert wird in diesem Umlauf durch den Regelprozess mitgenommen.

Ist D nach b) langsamer als Dalt wird in der Verzweigungsstelle [2] der Prozess über den Ausgang [NEIN] zu einer Verzweigungsstelle [5] geleitet. Dort wird ein Leistungsvergleich zwischen Q und Qalt

Im aktuellen Regelprozess gibt es von der Verzweigungsstelle [5] ausgehend die folgenden Möglichkeiten zur Weiterführung des Regelprozesses:

c) Die aktuelle Leistung Q ist größer als die vorherige Leistung Qalt. Dann wird über den Ausgang [JA] zu einem Verrechnungspunkt geführt, in dem die vorherige Drehzahl durch die Drehzahl D ersetzt wird. Die Drehzahl D wird weiterhin um den Summanden mit dem ursprünglichen Wert verringert. Der Prozess wird nun einer Verzweigungsstelle [6] zugeleitet.

d) Die aktuelle Leistung Q ist kleiner als die vorherige Leistung Qalt. Dann wird über den Ausgang [NEIN] die vorherige Drehzahl Dalt in einem weiteren Verrechnungspunkt durch die Drehzahl D ersetzt und die Drehzahl D wird um den Summanden vergrößert. Die Variable Richtung ist noch [GRÖSSER] und der Prozess wird über den Ausgang [JA] zu einem weiteren Verrechnungspunkt weitergeleitet. Dort wird der Summand SUMM mit dem Faktor 0,5 verringert. Der Prozess wird danach mit der Variablen Richtung als [KLEINER] weitergeleitet, wobei dieser Wert beim nächsten Regelumlauf zur Anwendung kommt.

Da die Variable Richtung nach den Änderungen der Drehzahlen D, Dalt nun den Wert [KLEINER] hat, wird der Prozess über den Ausgang [NEIN] mit der Variablen Richtung als [KLEINER] weitergeleitet. Die Prozessdaten werden danach wieder über die Temperatur- und Volumenstromermittlung der Leistungsrechnung zugeführt.

Der Prozess wird nun wieder über die Verzweigungsstellen [7] und [8] zurück zum Beginn des Regelprozesses und bei [FREIGABE] auf die Verzweigungsstellen [1] und [2] geführt

Aus den Alternativen a) bis d) des Regelprozesses wird also durch einen jeweiligen Leistungsvergleich der Prozess jeweils in ausgehend von dem Vergleich der Drehzahlen D, Dalt am Verzweigungspunkt [2] so weitergeführt, dass sich eine stetige Erhöhung der Leistungsübertragung ergibt.

Im Regelprozess ist dabei sowohl eine weitere Drehzahlerhöhung an der Umwälzpumpe 9 möglich, wenn sich daraus eine weitere Erhöhung der Leistungsübertragung ergibt. Andererseits wird bei einer Verringerung der Leistungsübertragung eine Drehzahlerhöhung oder eine Drehzahlverringerung an der Umwälzpumpe 9 möglich je nachdem in welcher Richtung sich eine erneute Erhöhung der Leistungsübertragung ergibt.

Die Drehzahländerungen werden über eine entsprechende Anwendung des Summanden SUMM bewirkt. Weiterhin wird zum Ausführen eines Einschwingvorgangs des Regelprozesses um den maximalen Grad an Leistungsübertragung der Summand SUMM jeweils verkleinert. Im Beispiel wird der Summand SUMM jeweils halbiert, allerdings wird die Verringerung im Verzweigungspunkt [7] auf den Wert 0,02 begrenzt.

Damit ergibt sich eine asymptotische Annäherung des Regelprozesses an die maximal mögliche Leistungsübertragung mit sich stetig verringernder Schwingweite, die auf einen Wert entsprechend dem Summanden SUMM = 0,02 begrenzt bleibt, um weiterhin eine echte Regelung zu ermöglichen.

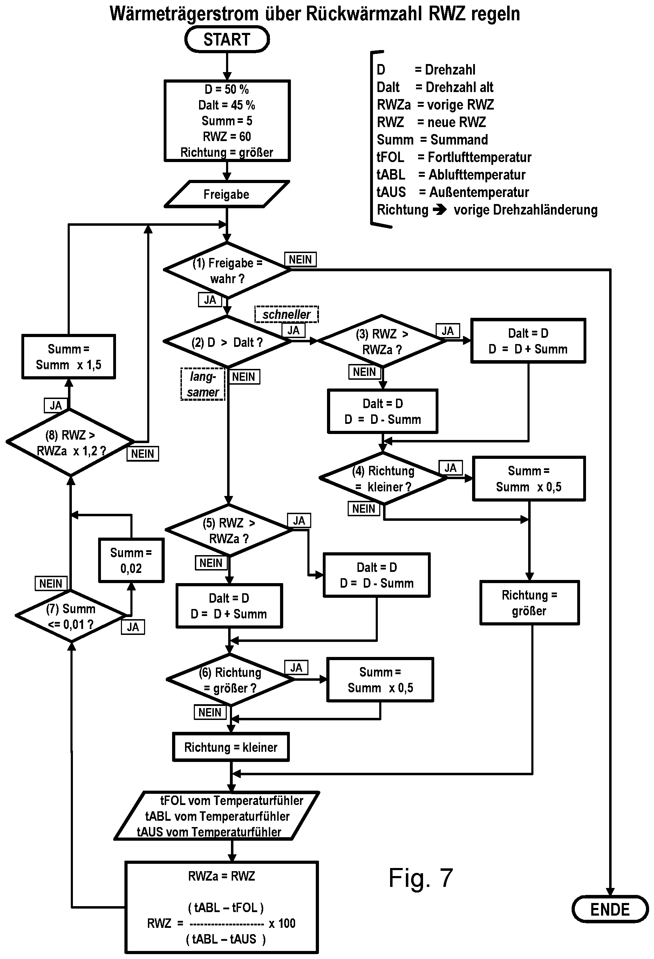

In **Figur** 7 ist ein mögliches Regelschema für ein Verfahren unter Einbeziehung von Temperaturmessungen im Abluftvolumenstrom AV und im Zuluftvolumenstrom ZV über eine daraus ermittelbare Rückwärmzahl RWZ dargestellt. Zunächst sind die zur Verwendung innerhalb des Verfahrens vorgesehenen Parameter genannt. Dies sind:

| | |
|---|---|
| D | als bekannte oder eingestellte Drehzahl der Umwälzpumpe 9 |
| Dalt | als jeweils vorher eingestellte Drehzahl der Umwälzpumpe 9 |
| RWZa | als vorige Rückwärmzahl RWZ |
| RWZ | als neue Rückwärmzahl RWZ |
| SUMM | als Summand zur Veränderung der Drehzahl der Umwälzpumpe 9 |
| tFOL | als Fortlufttemperatur |
| tABL | als Ablufttemperatur |
| tAUS | als Außentemperatur |
| Richtung | als Variable der Änderungsrichtung der Drehzahl der Umwälzpumpe 9 zwischen D und Dalt. |

Der Regelprozess wird mit festlegten Parametern D, Dalt, Summ, RWZ und der Richtungsvorgabe [GRÖSSER] für das Verhältnis der Drehzahlen D, Dalt der Umwälzpumpe 9 gestartet. Diese Vorgabewerte werden auf Grund von Erfahrungswerten ausgewählt.

Der Regelprozess nach **Figur** 7 ist prinzipiell in gleicher Weise aufgebaut wie der Regelprozess nach **Figur** 6.

Daher werden hier nur die Unterschiede benannt.

Wesentlich ist, dass in Verzweigungsstellen [3], [5], [7] und [8] nunmehr Vergleiche der Rückwärmzahlen RWZ und RWZa statt.

Weiterhin wird nach einer Erfassung der Fortlufttemperatur tFOL und der Ablufttemperatur tABL im Abluftvolumenstrom AV und der Außentemperatur tAUS im Zuluftvolumenstrom ZV eine Rückwärmzahlrechnung vorgenommen. Hierbei wird die vorherige Rückwärmzahl RWZa durch die aktuelle Rückwärmzahl RWZ ersetzt. Danach wird die aktuelle Rückwärmzahl RWZ neu berechnet. Die Berechnung erfolgt nach der folgenden Formel:

$$RWZ = (tABL - tFOL) / (tABL - tAUS) * 100.$$

Die Prozessführung erfolgt unter Einbeziehung dieser Parameter analog zum Regelungsprozess nach **Figur** 6.

Dies gilt zunächst für den Einstieg in den Regelprozess. In einer Verzweigungsstelle [2] wird der Prozess auf Basis der Vorgabewerte D und Dalt in Richtung [JA] der Verzweigungsstelle [3] weitergeleitet.

Für den Vergleich Rückwärmzahlen RWZ und RWZa liegt für RWZ noch kein Vergleichswert RWZa vor. Daher ist RWZ größer als RWZa und der Prozess wird in der Verzweigungsstelle [3] über den Ausgang [JA] zu einem Verrechnungspunkt geführt. Dort wird die Drehzahl Dalt der Umwälzpumpe 9 durch den Wert von D ersetzt und der Wert von D wird um den Summanden erhöht. Die neuen Werte werden dem Prozess nach dem Ausgang [NEIN] der Verzweigungsstelle [3] wieder zugeführt und einer nächsten Verzweigungsstelle [4] zugeleitet.

War zuvor die Variable Richtung [KLEINER] wird der Summand SUMM mit 0,5 multipliziert. Immer wenn sich die vorherige Variable Richtung geändert hat, halbiert sich anschließend der Summand SUMM.

Die Rückführung des Prozesses zum Ausgangspunkt erfolgt wieder über die Verzweigungsstellen [7] und [8]. Dort kann zunächst eine Begrenzung des Summanden SUMM auf 0,02 erfolgen. Weiterhin kann auch eine Erhöhung des Summanden SUMM erfolgen, wenn die Rückwärmzahl RWZ stark angestiegen ist, weil zum Beispiel der Abluftvolumenstrom AV verändert wurde.

Im Weiteren werden nunmehr im aktuellen Regelprozess von der Verzweigungsstelle [3] aus die Möglichkeiten a) und b) zur Weiterführung des Regelprozesses wie folgt ermittelt:

a) Die aktuelle Rückwärmzahl RWZ ist größer als die vorherige Rückwärmzahl RWZa. Dann wird über den Ausgang [JA] wie bereits beschrieben die Drehzahl D um den Summanden erhöht. Die Variable Richtung ist wieder [GRÖSSER].

b) Die aktuelle Rückwärmzahl RWZ ist kleiner als die vorherige Rückwärmzahl RWZa. Dann wird über den Ausgang [NEIN] die Drehzahl D in einem Verrechnungspunkt um den Summanden verringert. Der Prozess wird nun über den Ausgang [JA] zu einem weiteren Verrechnungspunkt weitergeleitet. Dort wird der Summand mit dem Faktor 0,5 multipliziert und daher verringert. Der Prozess wird danach mit der Variablen Richtung als [GRÖSSER] weitergeleitet.

Schließlich werden auch Im aktuellen Regelprozess von der Verzweigungsstelle [5] aus die Möglichkeiten c) und d) zur Weiterführung des Regelprozesses wie folgt ermittelt:

c) Die aktuelle Rückwärmzahl RWZ ist größer als die vorherige Rückwärmzahl RWZa. Dann wird über den Ausgang [JA] zu einem Verrechnungspunkt geführt, in dem die vorherige Drehzahl durch die Drehzahl D ersetzt wird. Die Drehzahl D wird weiterhin um den Summanden SUMM mit dem ursprünglichen Wert verringert. Der Prozess wird nun einer Verzweigungsstelle [6] zugeleitet.

d) Die aktuelle Rückwärmzahl RWZ ist kleiner als die vorherige Rückwärmzahl RWZa. Dann wird über den Ausgang [NEIN] die vorherige Drehzahl Dalt in einem weiteren Verrechnungspunkt durch die Drehzahl D ersetzt und die Drehzahl D wird um den Summanden SUMM vergrößert. Der Prozess wird nun über den Ausgang [JA] zu einem weiteren Verrechnungspunkt weitergeleitet. Dort wird der Summand SUMM mit dem Faktor 0,5 multipliziert und daher verringert. Der Prozess wird danach mit der Variablen Richtung als [KLEINER] weitergeleitet.

Aus den Alternativen a) bis d) des Regelprozesses wird also durch einen jeweiligen Vergleich der Rückwärmzahlen RWZ, RWZa der Prozess jeweils in die Richtung geführt, die zu einer Erhöhung der Rückwärmzahl RWZ führt.

Hierbei ist sowohl eine weitere Drehzahlerhöhung an der Umwälzpumpe 9 möglich, wenn sich daraus eine weitere Erhöhung der Rückwärmzahl RWZ ergibt. Andererseits wird bei einer Verringerung der Rückwärmzahl RWZ eine Drehzahlerhöhung oder eine Drehzahlverringerung an der Umwälzpumpe 9 möglich je nachdem in welcher Richtung sich eine erneute Erhöhung der Rückwärmzahl RWZ ergibt.

Die Drehzahländerungen werden über eine entsprechende Anwendung des Summanden SUMM bewirkt. Weiterhin wird zum Ausführen eines Einschwingvorgangs des Regelprozesses um den maximalen Wert der Rückwärmzahl RWZ der Summand SUMM jeweils verkleinert. Im Beispiel wird der Summand SUMM jeweils halbiert allerdings wird die Verringerung im Verzweigungspunkt [7] auf den Wert 0,02 begrenzt.

Damit ergibt sich eine asymptotische Annäherung des Regelprozesses an die maximal mögliche Rückwärmzahl RWZ mit sich stetig verringernder Schwingweite, die auf einen Wert entsprechend dem Summanden SUMM = 0,02 begrenzt bleibt, um weiterhin eine echte Regelung zu ermöglichen.

Der Regelungsprozess nach **Figur** 7 wird entsprechend ausgeführt, wenn die Rückwärmzahl RWZ in einer Anordnung nach **Figur** 5 aus einer Außenlufttemperatur tAUL und einer Zulufttemperatur tZUL im Zuluftvolumenstrom ZV sowie einer Ablufttemperatur tABL im Abluftvolumenstrom AV berechnet wird.

Kern der Erfindung ist ein Verfahren zur Regelung eines Wärmeträger-Volumenstromes in einem Kreislaufverbundsystem, wobei eine maximal mögliche Leistungsübertragung über den Wärmeträger gegeben ist.

Ein solches Verfahren kann gemäß Anspruch 1 mittels der Temperaturerfassung im Wärmeträger vor und nach dem Durchgang durch die Abluftwärmeübertrager AB1, AB2 und einer Messung des Wärmeträger-Volumenstroms durchgeführt werden.

Alternativ kann ein solches Verfahren nach Anspruch 3 mittels Temperaturmessungen zur Ermittlung des maximal möglichen Temperaturänderungsgrades zwischen dem Abluftvolumenstrom AV und dem Zuluftvolumenstrom ZV durchgeführt werden.

Die Regelung kann nach jeweils vorliegenden Erfordernissen erweitert werden.

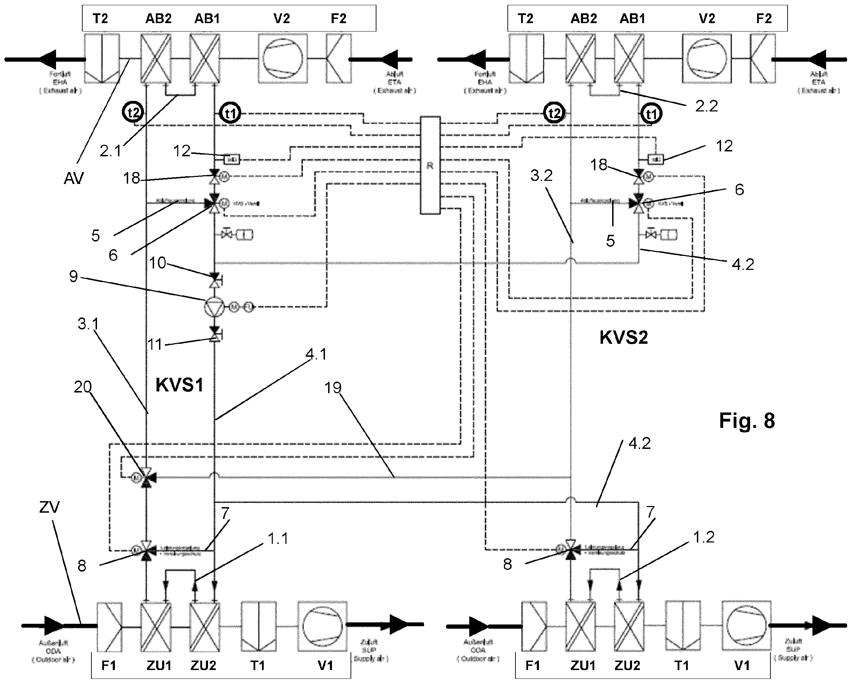

So wird in **Figur** 8 beispielhaft ein System eines gekoppelten Kreislaufverbundsystems mit zwei Teilsystemen KVS1 und KVS2, die mit einer gemeinsamen Umwälzpumpe 9 betrieben werden, mit einer erfindungsgemäßen vereinfachten Ventilregelung zur Erreichung einer maximalen Wärmerückgewinnung gezeigt.

Die Anordnung der Teil-Kreislaufverbundsysteme KVS1 und KVS2 ist analog zur Darstellung in **Figur** 1 aufgebaut.

Jedes der beiden Teil-Kreislaufverbundsysteme KVS1 und KVS2 weist im Zuluftvolumenstrom ZV zwischen einer Zuführung von Außenluft und einer Abführung von Zuluft zwei Zuluftwärmeübertrager ZU1 und ZU2 auf. Diese sind mittels einer Wärmeträgerleitung 1.1, 1.2 entgegen der Strömungsrichtung des Zuluftvolumenstroms ZV in Reihe geschaltet. Den Zuluftwärmeübertragern ZU1, ZU2 sind ein Filter F1, ein Tropfenabscheider T1 und ein Zuluftventilator V1 zugeordnet.

Jedes Kreislaufverbundsystem KVS1, KVS2 weist im Abluftvolumenstrom AV zwischen einer Zuführung von Abluft und einer Abführung von Fortluft zwei Abluftwärmeübertrager AB1 und AB2 auf. Diese sind mittels einer Wärmeträgerleitung 2.1, 2.2 entgegen der Strömungsrichtung des Abluftvolumenstroms AV in Reihe geschaltet. Den Abluftwärmeübertragern AB1, AB2 sind ein Filter F2, ein Abluftventilator V1 und ein Tropfenabscheider T2 zugeordnet.

Die Zuluftwärmeübertrager ZU1 und Abluftwärmeübertrager AB2 sind jeweils mittels einer je Wärmeträgerleitung 3.1, 3.2 in einer Strömungsrichtung zum Abluftwärmeübertrager AB2 hin miteinander verbunden.

Die Zuluftwärmeübertrager ZU2 und Abluftwärmeübertrager AB1 im ersten Kreislaufverbundsystem KVS1 sind jeweils mittels einer Wärmeträgerleitung 4.1 bzw. 4.2 in einer Strömungsrichtung zum Zuluftwärmeübertrager ZU2 hin miteinander verbunden. Die Wärmeträgerleitungen 4.1 und 4.2 sind teilweise in einer einzigen Leitungsführung zusammengefasst.

Die Wärmeträgerleitungen 3.1 bzw. 3.2 und 4.1 bzw. 4.2 sind durch jeweils eine Leitung 5 zur Abluftauskoppelung in Strömungsrichtung zur Wärmeträgerleitung 4.1 bzw. 4.2 gekoppelt. die durch je ein motorisch regelbares KVS-Ventil 6 in die Wärmeträgerleitungen 4.1 bzw. 4.2 eingekoppelt sind.

Die Wärmeträgerleitungen 3.1 bzw. 3.2 und 4.1 bzw. 4.2 sind weiterhin durch je eine Leitung 7 zur Leistungsregelung und zum Vereisungsschutz in Strömungsrichtung der Wärmeträgerleitungen 3.1 bzw. 3.2 gekoppelt, wobei die Leitungen 7 jeweils durch ein motorisch regelbares Ventil 8 in die Wärmeträgerleitungen 3.1 bzw. 3.2 eingekoppelt sind.

Im Bereich der zusammengefassten Wärmeträgerleitungen 4.1, 4.2 ist eine Umwälzpumpe 9 mit einer Förderrichtung von den Abluftwärmeübertragern AB1 zu den Zuluftwärmeübertragern ZU2 angeordnet. Die Umwälzpumpe 9 fördert den Wärmeträger durch die Zuluftwärmeübertrager ZU1 und ZU2, die Ventile 8, die Abluftwärmeübertrager AB2, AB1 und die KVS-Ventile 6 wieder zur Umwälzpumpe 9. In der Wärmeträgerleitung 4.1, 4.2 ist der Umwälzpumpe 9 ein Absperrventil 10 vorgeordnet und ein Absperrventil 11 nachgeordnet.

Für den gemeinsamen gesteuerten Betrieb der Kreislaufverbundsysteme KVS1, KVS2 ist die Wärmeträgerleitung 3.1 ist über eine Verbindungsleitung 19 mit der Wärmeträgerleitung 4.1 mittels eines in die Wärmeträgerleitung 3,1 eingekoppelten Dreiwegeventils 20 gekoppelt.

In den Wärmeträgerleitungen 4.1, 4.2 ist nach dem Austritt des Wärmeträgers aus den Abluftwärmeübertragern AB1 je ein Temperaturfühler t1 angeordnet.

In den Wärmeträgerleitungen 3.1, 3.2 ist vor dem Eintritt des Wärmeträgers in die Abluftwärmeübertrager AB2 je ein Temperaturfühler t2 angeordnet.

In den Wärmeträgerleitungen 4.1, 4.2 ist nach dem Austritt des Wärmeträgers aus den Abluftwärmeübertragern AB1 und nach den Temperaturfühlern t1 je eine Volumenstrommesseinrichtung 12 angeordnet.

In den Wärmeträgerleitungen 4.1, 4.2 ist nach dem Austritt des Wärmeträgers aus den Abluftwärmeübertragern AB1, nach den Temperaturfühlern t1 und nach den Volumenstrommesseinrichtungen 12 ein motorisch regelbares Volumenregelventil 18 bzw. 19 angeordnet.

Zur Ausführung einer Regelung sind die je zwei Temperaturfühler t1, t2, weiter die Stelleinrichtungen der beiden KVS-Ventile 6, der beiden Ventile 8, der Volumenregelventile 18 und des Dreiwegeventils 20, sowie die beiden Volumenstrommesseinrichtungen 12 und die Umwälzpumpe 9 mit jeweils eigenen Datenverbindungen mit einer Regeleinrichtung R verbunden.

Die Regelung erfolgt in diesem aus den Kreislaufverbundsystemen KVS1 und KVS2 bestehenden Regelsystem nach dem weiter oben beschriebenen Prinzip. Hierbei erfolgt jedoch die Regelung nicht in erster Linie durch Steuerung der Umwälzpumpe 9, sondern es wird eine Verteilung der Wärmeenergie mittels des Dreiwegeventils 20, sowie der Volumenregelventile 18 vorgenommen, um die Energieausbeute für den jeweiligen Betriebsfall am Maximum zu halten. Die Umwälzpumpe 9 braucht nur in Bezug auf den Gesamtleistungsbedarf geregelt zu werden, der von Betriebsfall zu Betriebsfall unterschiedlich hoch ist.

## Patentansprüche

1. Verfahren zur Regelung eines Wärmeträger-Volumenstroms in wenigstens zwei gekoppelten Kreislaufverbundsystemen (KVS1, KVS2) mit jeweils wenigstens einem in je einem eigenen Zuluftvolumenstrom (ZV) angeordneten Zuluftwärmeübertrager (ZU1, ZU2) und jeweils wenigstens einem in je einem eigenen Abluftvolumenstrom (AV) angeordneten Abluftwärmeübertrager (AB1, AB2),

   wobei der/die Zuluftwärmeübertrager (ZU1, ZU2) und der/die Abluftwärmeübertrager (AB1, AB2) mittels Wärmeträgerleitungen (3.1, 3.2, 4.1, 4.2) derart gekoppelt sind, dass der Wärmeträger mittels wenigstens einer Umwälzpumpe (9) nacheinander durch den/die Zuluftwärmeübertrager (ZU1, ZU2) und den/die Abluftwärmeübertrager (AB1, AB2) förderbar ist,
   **dadurch gekennzeichnet,**
   **dass** die gekoppelten Kreislaufverbundsysteme (KVS1, KVS2) so betrieben werden, dass auf der Basis von Temperaturmessungen des Wärmeträger-Volumenstroms vor dem Eintritt in den/die Abluftwärmeübertrager (AB1, AB2) und nach dem Austritt aus dem/den Abluftwärmeübertragern (AB1, AB2),
   sowie optional einer parallel dazu ausgeführten Volumenstrommessung des Wärmeträger-Volumenstroms (V) durch eine Ventilsteuerung in jedem Kreislaufverbundsystem (KVS1, KVS2) so ausgeregelt wird, dass mittels des gemessenen Wärmeträger-Volumenstroms (V) und der Temperaturmessungen eine Ermittlung einer maximal möglichen Leistungsübertragung mittels des Wärmeträgers erfolgt,
   wobei wenigstens eine Ventilsteuerung in der Volumenregelung jeder Wärmeträgerleitung (4.1, 4.2) in Zuordnung zur Umwälzpumpe (9) und weiterhin in einer Verbindungsleitung (19) zwischen den Wärmeträgerleitung (3.1) und (3.2) erfolgt.

2. Vorrichtung zur Durchführung eines Verfahrens nach Anspruch 1 zur Regelung von Wärmeträger-Volumenströmen in einem gekoppelten Kreislaufverbundsystem (KVS1, KVS2) mit jeweils wenigstens einem in je einem Zuluftvolumenstrom (ZV) angeordneten Zuluftwärmeübertrager (ZU1, ZU2) und jeweils wenigstens einem in je einem Abluftvolumenstrom (AV) angeordneten Abluftwärmeübertrager (AB1, AB2), wobei der/die Zuluftwärmeübertrager (ZU1, ZU2) und der/die Abluftwärmeübertrager (AB1, AB2) mittels Wärmeträgerleitungen (3.1, 3.2, 4.1, 4.2) derart gekoppelt sind, dass der Wärmeträger mittels wenigstens einer Umwälzpumpe (9) nacheinander durch den/die Zuluftwärmeübertrager (ZU1, ZU2) und den/die Abluftwärmeübertrager (AB1, AB2) förderbar ist,

   **dadurch gekennzeichnet,**
   **dass** wenigstens in einer Wärmeträgerleitung (3.1) ein Temperaturfühler (t2) und in einer Wärmeträgerleitung (3.2) ein Temperaturfühler (t2) vor dem Eintritt des Wärmeträgers in den/die Abluftwärmeübertrager (AB1, AB2),
   **dass** wenigstens in einer Wärmeträgerleitung (4.1) ein Temperaturfühler (t1) und in einer Wärmeträgerleitung (4.2) ein Temperaturfühler (t1) nach dem Austritt des Wärmeträgers aus dem/den Abluftwärmeübertragern (AB1, AB2) angeordnet ist,
   **dass** in den Wärmeträgerleitungen (4.1) und (4.2) jeweils ein Volumenregelventil (18) der Umwälzpumpe (9) zugeordnet vorgesehen ist,
   **dass** eine Verbindungsleitung (19) zwischen den Wärmeträgerleitungen (3.1) und (3.2) vorgesehen ist, die mittels wenigstens eines regelbaren Dreiwegeventils (20) mit den Wärmeträgerleitungen (3.1, 3.2) gekoppelt ist, und
   **dass** eine Regeleinrichtung (R) in Verbindung mit den Temperaturfühlern (t1, t2) und der Umwälzpumpe (9) vorgesehen ist, derart, dass auf Basis der festgestellten Messwerte mittels Veränderung des Wärmeträger-Volumenstroms eine sinkende Leistungsübertragung des Wärmeträgers ausgeregelt wird.

3. Vorrichtung nach Anspruch 2, **dadurch gekennzeichnet, dass** eine Anordnung von Kreislaufverbundsystemen (KVS1, KVS2) für wenigstens zwei Lüftungsgeräte vorgesehen ist, wobei die Kreislaufverbundsysteme (KVS1, KVS2) mit einer gemeinsamen Umwälzpumpe (9) betrieben werden, wobei die Umwälzpumpe (9) in einer gemeinsamen Wärmeträgerleitung (4.1, 4.2) angeordnet ist und wobei in den Wärmeträgerleitungen (4.1, 4.2) der Umwälzpumpe (9) zugeordnet je ein Volumenregelventil (18) vorgesehen ist, wobei Wärmeträgerleitungen (3.1, 3.2) zur Zuleitung des Wärmeträgers von den Zuluftwärmeübertragern (ZU1) zu den Abluftwärmeübertragern (AB2) mittels einer Leitungsverbindung (19) miteinander verbunden und über ein Dreiwegeventil (20) gekoppelt sind und wobei wenigstens die Volumenregelventile (18) und das Dreiwegeventil (20) mit der Regeleinrichtung (R) schaltungstechnisch verbunden sind.

Fig. 1

Fig. 2

Fig. 3

Fig. 4

**EP 4 067 770 A1**

Fig. 5

# Wärmeträgerstrom regeln mit magnetisch-induktivem Durchflussmesser

**START** (MID)

| | |
|---|---|
| D | = Drehzahl |
| Dalt | = voriger Drehzahl |
| Qalt | = vorige Leistung |
| Q | = Leistung |
| ro | = Dichte Wärmeträger |
| c | = Wärmekapazität |
| Summ = Summand | |
| tein | = gemessene Temperatur |
| taus | = gemessene Temperatur |
| V | = Wärmeträger-Volumenstrom |
| Richtung ➜ vorige Drehzahländerung | |

D = 50 %
Dalt = 45 %
Summ = 5 %
Q = 20
Richtung = größer

Freigabe

(1) Freigabe = wahr ?  NEIN

JA

*schneller*

(2) D > Dalt ?  JA  →  (3) Q > Qalt ?  JA  →  Dalt = D  D = D + Summ

*langsamer*  NEIN

NEIN

Dalt = D
D = D - Summ

(4) Richtung = kleiner ?  JA  →  Summ = Summ x 0,5

NEIN

Summ = Summ x 1,5

(8) Q > Qalt x 1,2 ?  JA

NEIN

(5) Q > Qalt ?  JA  →  Dalt = D  D = D - Summ

NEIN

Summ = 0,02

Dalt = D
D = D + Summ

Richtung = größer

(7) Summ <= 0,01 ?  NEIN

JA

(6) Richtung = größer ?  JA  →  Summ = Summ x 0,5

NEIN

Richtung = kleiner

tein vom Temperaturfühler
taus vom Temperaturfühler
V vom Durchflussmesser

**Fig. 6**

Δt = tein - taus
Qalt = Q
Dichte ro neu berechnen
Wärmekapazität c neu berechnen
Q = V x ro x c x Δt / 3,6

**ENDE**

# Wärmeträgerstrom über Rückwärmzahl RWZ regeln

START

D = 50 %
Dalt = 45 %
Summ = 5
RWZ = 60
Richtung = größer

Freigabe

D = Drehzahl
Dalt = Drehzahl alt
RWZa = vorige RWZ
RWZ = neue RWZ
Summ = Summand
tFOL = Fortlufttemperatur
tABL = Ablufttemperatur
tAUS = Außentemperatur
Richtung ➔ vorige Drehzahländerung

(1) Freigabe = wahr ?    NEIN

JA

Summ =
Summ x 1,5

(2) D > Dalt ?    *schneller*    JA    (3) RWZ > RWZa ?    JA    Dalt = D
D = D + Summ

*lang-samer*    NEIN    NEIN    Dalt = D
D = D - Summ

JA

(8) RWZ >
RWZa x 1,2 ?    NEIN

(4) Richtung = kleiner ?    JA    Summ =
Summ x 0,5

NEIN

(5) RWZ > RWZa ?    JA

Summ =
0,02    NEIN    Dalt = D
D = D - Summ

NEIN    Dalt = D
D = D + Summ    Richtung =
größer

(7) Summ
<= 0,01 ?    JA

(6) Richtung = größer ?    JA    Summ =
Summ x 0,5

NEIN

Richtung = kleiner

tFOL vom Temperaturfühler
tABL vom Temperaturfühler
tAUS vom Temperaturfühler

RWZa = RWZ

$$RWZ = \frac{(\,tABL - tFOL\,)}{(\,tABL - tAUS\,)} \times 100$$

Fig. 7

ENDE

**Fig. 8**

# EP 4 067 770 A1

Europäisches Patentamt
European Patent Office
Office européen des brevets

## EUROPÄISCHER RECHERCHENBERICHT

**Nummer der Anmeldung**

**EP 22 16 9607**

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | DE 20 2013 105854 U1 (VETTER LUFTTECHNIK GMBH & CO KG [DE]) 11. Februar 2014 (2014-02-11) * das ganze Dokument * ----- | 1-3 | INV. F24F12/00 F24F11/00 F24F140/20 F24F11/83 F24F110/10 |
| A | EP 0 222 963 A1 (JAGGI AG BERN [CH]) 27. Mai 1987 (1987-05-27) * das ganze Dokument * ----- | 1-3 | |
| A | US 2009/044935 A1 (NUTSOS MIKAEL [SE]) 19. Februar 2009 (2009-02-19) * das ganze Dokument * ----- | 1-3 | |

RECHERCHIERTE SACHGEBIETE (IPC)

F24F

Der vorliegende Recherchenbericht wurde für alle Patentansprüche erstellt

| Recherchenort | Abschlußdatum der Recherche | Prüfer |
|---|---|---|
| München | 18. August 2022 | Decking, Oliver |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 22 16 9607

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-08-2022

| Im Recherchenbericht angeführtes Patentdokument | Datum der Veröffentlichung | Mitglied(er) der Patentfamilie | | Datum der Veröffentlichung |
|---|---|---|---|---|
| DE 202013105854 U1 | 11-02-2014 | KEINE | | |
| EP 0222963 A1 | 27-05-1987 | AT | 49466 T | 15-01-1990 |
| | | EP | 0222963 A1 | 27-05-1987 |
| US 2009044935 A1 | 19-02-2009 | CA | 2645477 A1 | 20-09-2007 |
| | | EP | 1994354 A1 | 26-11-2008 |
| | | JP | 5226659 B2 | 03-07-2013 |
| | | JP | 2009529652 A | 20-08-2009 |
| | | RU | 2008140148 A | 20-04-2010 |
| | | US | 2009044935 A1 | 19-02-2009 |
| | | WO | 2007106030 A1 | 20-09-2007 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102012105255 A1

**In der Beschreibung aufgeführte Nicht-Patentliteratur**

- **CHRISTOPH KAUP.** Hybride Hochleistungs-WRG auf Basis des Kreislaufverbundsystems. *Fach Journal,* 2004, vol. 05, 4-11

- Wärme- und Kälterückgewinnung in raumlufttechnischen Anlagen. 2001